# EUROPÄISCHE PATENTSCHRIFT

(11) **EP 1 600 254 B1**
(45) Veröffentlichungstag und Bekanntmachung des Hinweises auf die Patenterteilung: **10.10.2007**
(21) Anmeldenummer: 05010415.7
(22) Anmeldetag: 13.05.2005
(51) Int. Cl.: B23Q 7/04

(54) **Vorschubeinheit für eine Maschine zum Bearbeiten von Werkstücken sowie Verfahren zum Bearbeiten solcher Werkstücke**
Conveying unit for machine for working workpieces and method for machining such workpieces
Unité d'avance pour machine à usiner des pièces et méthode pour usiner ces pièces

(30) Priorität: 27.05.2004 DE 102004027888
(43) Veröffentlichungstag der Anmeldung: 30.11.2005
(73) Patentinhaber: Michael Weinig Aktiengesellschaft, D-97941 Tauberbischofsheim (DE)
(72) Erfinder: Gurka, Paul, 69429 Waldbrunn (DE)
(74) Vertreter: Jackisch-Kohl, Anna-Katharina

(56) Entgegenhaltungen:
- EP-A- 1 304 188
- US-A1- 2003 024 363
- PATENT ABSTRACTS OF JAPAN Bd. 007, Nr. 221 (M-246), 30. September 1983 (1983-09-30) & JP 58 114837 A (TOKIO TAKAHATA), 8. Juli 1983 (1983-07-08)

## Beschreibung

Die Erfindung betrifft eine Vorschubeinheit für eine Maschine zum Bearbeiten von Werkstücken aus Holz, Kunststoff oder dergleichen nach dem Oberbegriff des Anspruches 1 sowie ein Verfahren zum Bearbeiten solcher Werkstücke nach dem Oberbegriff des Anspruches 7.

Es ist bekannt, aus Hölzern Fenster- und Türrahmen bzw. Fensterflügel herzustellen. Die Hölzer werden hierbei an der Stirnseite sowie an den Längsseite mit entsprechenden Werkzeugen profiliert. Zum Transport der Werkstücke durch die Maschine sind Vorschubwalzen vorgesehen, die an einem Träger aufgehängt und drehbar angetrieben sind. Die Vorschubwalzen drücken auf die Werkstücke, die auf Tischplatten abgestützt sind und auf denen sie mit den Vorschubwalzen durch die Maschine transportiert werden. Die Vorschubwalzen verschleißen und verschmutzen, so daß der Transport der Werkstükke beeinträchtigt ist. Außerdem ist der Transport von kurzen und/oder schmalen Werkstücken problematisch.

Es ist ferner eine Vorschubeinheit bekannt (Patent Abstracts of Japan Bd. 007, Nr. 221 (M-246), 30. September 1983 (1983-09-30) & JP 58 114837 A (Tokio Takahata), 8. Juli 1983 (1983-07-08)), bei der auf einem Schlitten ein Träger befestigt ist. An ihm sind auf gleicher Höhe einander gegenüberliegend zwei Zylindereinheiten montiert, die in Verschieberichtung des Schlittens gegeneinander verstellbare Spitzen aufweisen, zwischen denen das Werkstück aufgenommen wird. Mit den beiden Spitzen kann nur ein einziges Werkstück gehalten werden, dessen Länge nicht größer sein darf als der maximale Abstand der Spitzen der Zylindereinheiten voneinander.

Es ist aus diesem Grunde bekannt, die Werkstücke auf einer Vorschubeinheit aufzuspannen, mit der die Werkstücke für die Bearbeitung durch die Maschine transportiert werden. Auch bei einer solchen Maschine ist die Bearbeitung kurzer oder langer Werkstücke problematisch.

Der Erfindung liegt die Aufgabe zugrunde, die gattungsgemäße Vorschubeinheit und das gattungsgemäße Verfahren so auszubilden, daß die Werkstücke einwandfrei gespannt und mit hoher Produktivität bearbeitet werden können.

Diese Aufgabe wird bei der gattungsgemäßen Vorschubeinheit erfindungsgemäß mit den kennzeichnenden Merkmalen des Anspruches 1 und beim gattungsgemäßen Verfahren erfindungsgemäß mit den kennzeichnenden Merkmalen des Anspruches 7 gelöst.

Die erfindungsgemäße Vorschubeinheit weist die in Vorschubrichtung gegeneinander verstellbaren Vorschubelemente auf. Durch sie wird erreicht, daß mit der Vorschubeinheit nicht nur ein, sondern auch mehrere kurze Werkstücke transportiert und bearbeitet werden können. Sind die zu bearbeitenden Werkstücke überlang, können die beiden Vorschubelemente entsprechend weit auseinander gefahren werden, so daß dieses lange Werkstück optimal eingespannt werden kann. Da die Vorschubelemente der Vorschubeinheit auseinander gefahren werden können, können Werkstücke eingespannt und bearbeitet werden, die länger sind, als es die Länge der beiden einzelnen Vorschubelemente zulassen würde. Bei mittellangen Werkstücken werden die beiden Vorschubelemente zusammengefahren, so daß dieses mittellange Werkstück zuverlässig eingespannt werden kann. Bei kurzen Werkstücken können die Vorschubelemente auseinander gefahren werden, so daß auf jedem Vorschubelement ein kurzes Werkstück eingespannt werden kann. Auf diese Weise können mit der erfindungsgemäßen Vorschubeinheit insbesondere auch kurze Werkstücke einfach, zuverlässig und mit hoher Produktivität durch die Maschine transportiert und bearbeitet werden. Ist auf jedem Vorschubelement ein Werkstück eingespannt, ergeben sich bei der Bearbeitung dieser Werkstücke Zeitvorteile, da Nebenzeiten, wie Werkstückübergabe, Werkstücke ein- und -ausfahren, Werkzeugwechsel und dergleichen, wegfallen.

Weitere Merkmale der Erfindung ergeben sich aus den weiteren Ansprüchen, der Beschreibung und den Zeichnungen.

Die Erfindung wird anhand eines in den Zeichnungen dargestellten Ausführungsbeispieles näher erläutert. Es zeigen
- Fig. 1: in schematischer Darstellung eine Vorschubeinheit einer erfindungsgemäßen Bearbeitungsmaschine,
- Fig. 2 und Fig. 3: die Vorschubeinheit gemäß Fig. 1 in unterschiedlichen Stellungen zur Aufnahme unterschiedlich langer Werkstücke,
- Fig. 4 bis Fig. 16: verschiedene Verfahrensschritte bei der Bearbeitung von Werkstücken auf der erfindungsgemäßen Bearbeitungsmaschine,
- Fig. 17 und Fig. 18: eine Simultanbearbeitung auf der erfindungsgemäßen Bearbeitungsmaschine,
- Fig. 19 bis Fig. 27: eine Bearbeitung von Werkstücken auf einer zweiten Ausführungsform einer erfindungsgemäßen Bearbeitungsmaschine.

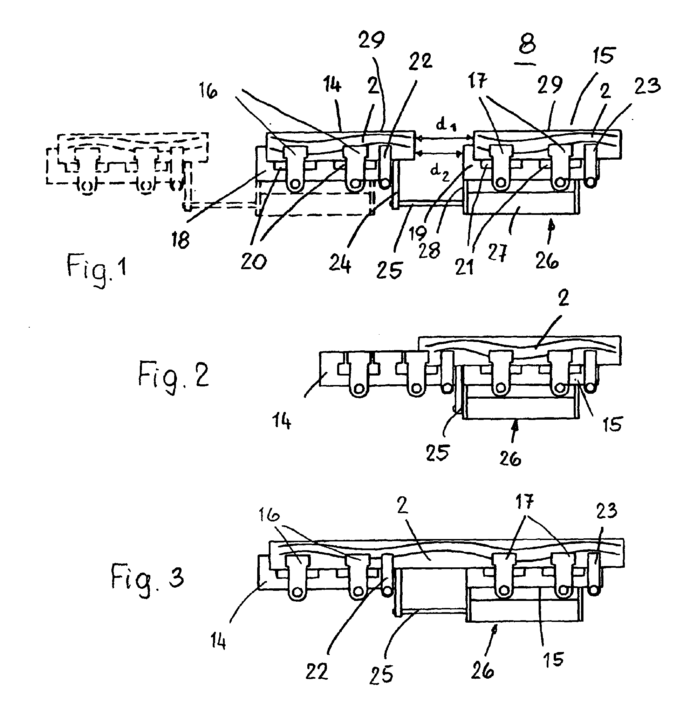

Mit der Maschine werden Teile, vorzugsweise Hölzer bearbeitet, aus denen beispielsweise Fenster- oder Türrahmen bzw. -flügel zusammengesetzt werden. In der Maschine können aber auch Hölzer bearbeitet werden, die für Treppenstufen, Möbelteile in Rahmen- oder Stollenbauweise oder dergleichen eingesetzt werden. Die Teile 2 können auch aus Metall, vorzugsweise Leichtmetall, insbesondere Aluminium, bestehen. Die Maschine hat eine Bearbeitungseinheit 1 (Fig. 4), mit der die Hölzer 2 sowohl stirnseitig als auch an ihren Längsseiten bearbeitet werden können. Die Bearbeitungseinheit 1 hat zwei parallel zueinander liegende Führungen 3, 4, längs derer Bearbeitungswerkzeuge 5, 6 verfahren werden können. Die Führungen 3, 4 liegen senkrecht zu einer Führung 7, längs der die Hölzer 2 mit Vorschubeinheiten 8, 8' transportiert werden.

Die Werkzeuge 5, 6 sind wechselbar in Bearbeitungsspindeln gehalten, welche auf einem Schlitten 9, 10 sitzen. Die beiden Schlitten 9, 10 sind vorteilhaft unabhängig voneinander verfahrbar, so daß mit ihnen unterschiedliche Arbeiten am Holz 2 vorgenommen werden können. Bei einer solchen Ausbildung ist es auch möglich, daß das eine Werkstück das Holz bearbeitet, während das andere Werkzeug in einer Wechselstation ausgetauscht wird.

Die Werkzeuge 5, 6 werden jeweils einem Werkzeugmagazin 11, 12 entnommen, das sich am freien Ende der Führungen 3, 4 befindet und in dem die Werkzeuge in bekannter Weise gelagert sind. Die Werkzeugmagazine 11, 12 sind um eine Achse drehbar, so daß rasch das für den jeweiligen Bearbeitungsvorgang notwendige Werkzeug an die Einwechselstelle gebracht werden kann. Die Übergabe der Werkzeuge aus den Magazinen 11, 12 in die Schlitten 9, 10 und umgekehrt kann von Hand, aber auch automatisch mit Werkzeugwechslern durchgeführt werden.

Die Vorschubeinheit 8 (Fig. 1 bis 3) besteht aus zwei in Verfahrrichtung 13 gegeneinander verstellbaren Vorschubelementen 14 und 15, die in Verfahrrichtung 13 miteinander gekoppelt sind, so daß sie gleichzeitig gemeinsam längs der Führung 7 verfahren werden. Je nach Länge der zu bearbeitenden Hölzer 2 können die beiden Vorschubelemente 14, 15 in unterschiedlichem Abstand zueinander eingestellt werden.

Wie Fig. 4 zeigt, hat die Maschine zwei Vorschubeinheiten 8, 8', die auf verschiedenen Seiten der Führung 7 liegen und beiderseits der Führungen 3, 4 angeordnet sind. Die Vorschubeinheit 8' ist vorteilhaft gleich ausgebildet wie die Vorschubeinheit 8 und weist die beiden Vorschubelemente 14', 15' auf, die relativ zueinander in Verfahrrichtung 13 gegeneinander verstellt werden können.

Wie Fig. 1 zeigt, sind die beiden Vorschubelemente 14, 15 der Vorschubeinheit 8 gleich ausgebildet und haben quer zur Verfahrrichtung 13 in Höhenrichtung verstellbare Klemmbacken 16, 17, mit denen die zu bearbeitenden Hölzer 2 im Vorschubelement 14, 15 eingespannt werden können. Die Hölzer 2 liegen auf einer Auflage 18, 19 auf, die als rechenartiger Träger ausgebildet ist. Die Klemmbacken 16, 17 sind so angeordnet, daß sie den Lücken 20, 21 in den Auflagen 18, 19 gegenüberliegen. Die beiden Klemmbacken 16, 17 jedes Vorschubelementes 14, 15 sind durch jeweils einen (nicht dargestellten) Hubzylinder unabhängig voneinander in Höhenrichtung verstellbar. Dadurch können die einzelnen Klemmbacken 16 und 17 unabhängig voneinander verstellt werden. Es ist selbstverständlich möglich, die Klemmbacken 16 bzw. 17 auch gemeinsam mit einem einzigen Hubantrieb zu verstellen.

Die beiden Vorschubelemente 14, 15 sind an dem Ende, an dem die Hölzer 2 stirnseitig bearbeitet werden sollen, mit jeweils einer weiteren, schmaleren Klemmbacke 22, 23 versehen, mit denen ebenfalls die Hölzer 2 im Vorschubelement 14, 15 eingespannt werden können. Die schmaleren Klemmbacken 22, 23 sind vorteilhaft unabhängig von den Klemmbacken 16, 17 höhenverstellbar. Es ist aber auch möglich, die beiden Klemmbacken 22, 23 zusammen mit den Klemmbacken 16, 17 durch einen gemeinsamen Hubantrieb zu verstellen.

Die (nicht dargestellten) Hubzylinder sind an den Auflagen 18, 19 befestigt.

Die beiden Vorschubelemente 14, 15 können relativ zueinander in Verfahr- bzw. Vorschubrichtung 13 verstellt werden. Hierzu ist am Vorschubelement 14 ein quer zur Verfahrrichtung abstehender Arm 24 vorgesehen, an dem das eine Ende einer Kolbenstange 25 befestigt ist. Sie ist Teil einer Verstelleinrichtung 26, die am Vorschubelement 15 befestigt ist und einen Zylinder 27 aufweist, der an der Auflage 19 befestigt ist. Durch Ein- und Ausfahren der Kolbenstange 25 kann der Abstand zwischen den beiden Vorschubelementen 14, 15 fest eingestellt werden. In Fig. 1 ist dargestellt, daß die Kolbenstange 25 vollständig aus dem Zylinder 27 ausgefahren ist. In diesem Falle haben die beiden Hölzer 2, die auf den Vorschubelementen 14, 15 festgespannt sind, den Abstand d₁ voneinander, gemessen zwischen den einander zugewandten Stirnseiten der Hölzer 2. Der Abstand zwischen der Stirnseite 28 des Zylinders 27 bzw. des Vorschubelementes 15 und der Stirnseite des auf dem Vorschubelement 14 eingespannten Holzes 2 ist mit d₂ gekennzeichnet. Diese Abstände sind so gewählt, daß bei der noch zu beschreibenden Bearbeitung der beiden Hölzer 2 deren Stirnseiten mit einem entsprechenden Werkzeug bearbeitet werden können. Die Abstand d₁, d₂ müssen somit so eingestellt werden, daß das entsprechende Bearbeitungswerkzeug zwischen die Hölzer 2 einfahren kann.

In Fig. 1 ist mit gestrichelten Linien ein weiteres Vorschubelement dargestellt, auf dem ein weiteres Holz eingespannt werden kann. Das weitere Vorschubelement ist über eine weitere Verstelleinrichtung mit dem Vorschubelement 14 verbunden, die gleich ausgebildet ist wie die Verstelleinrichtung 26. Das weitere Vorschubelement läßt sich damit gegenüber dem Vorschubelement 14 in gleicher Weise verstellen wie das Vorschubelement 14 gegenüber dem Vorschubelement 15. In gleicher Weise können weitere Vorschubelemente vorgesehen werden.

Fig. 2 zeigt die Stellung der beiden Vorschubelemente 14, 15, wenn ein Holz 2 bearbeitet werden soll, das länger ist als das Holz 2 gemäß Fig. 1, dessen Länge aber kleiner ist als die doppelte Länge der Vorschubelemente 14, 15. In diesem Falle wird die Kolbenstange 25 der Verstelleinrichtung 26 eingefahren, so daß die beiden Vorschubelemente 14, 15 aneinanderliegen. Das Holz 2 wird so eingespannt, daß es teilweise auf dem in Vorschubrichtung vorderen Vorschubelement 14 aufliegt und mit seinem entgegengesetzten Ende über das hintere Vorschubelement 15 ragt.

Fig. 3 zeigt die Möglichkeit, mit der Vorschubeinheit 8 auch sehr lange Hölzer 2 zu bearbeiten. Beispielhaft ist dargestellt, daß die Länge des Holzes 2 größer als die gesamte Länge der beiden Vorschubelemente 14, 15 ist. Um dennoch das Holz 2 zuverlässig einzuspannen, wird die Kolbenstange 15 der Verstellvorrichtung 26 wieder ausgefahren. Nun kann das lange Holz 2 mit sämtlichen Klemmbacken 16, 22 und 17, 23 der beiden Vorschubelemente 14, 15 eingespannt werden.

Mit der Verstelleinrichtung 26 können die Vorschubelemente 14, 15 auf festen Abstand eingestellt werden. In diesem Fall wird die Verstelleinrichtung 26, wie dargestellt, von einem Hydraulik- oder Pneumatikzylinder gebildet und hydraulisch oder pneumatisch betätigt.

Die Verstelleinrichtung 26 kann aber auch so ausgebildet sein, daß die Vorschubelemente 14, 15 auf variable Abstände eingestellt werden können. Die Verstelleinrichtung 26 wird dann beispielhaft als CNC-Achse mit motorisch angetriebener Spindel-Mutter-Einheit, als Servohydraulik- oder als Servopneumatik-Zylinder ausgebildet.

Die Verstelleinrichtungen 26 können automatisch über eine Steuerung oder manuell betätigbar sein.

Die Vorschubeinheit 8' ist gleich ausgebildet wie die zuvor beschriebene Vorschubeinheit 8.

Für die Bearbeitung werden die Hölzer 2 zunächst in die Vorschubeinheit 8' so eingespannt, daß sie mit ihrer in Vorschubrichtung 13 linken Längsseite 37, 38 über die Auflage 18, 19 überstehen (Fig. 4). Damit kann das Holz 2 an seiner Längsseite 37, 38 durch die Werkzeuge einwandfrei bearbeitet werden.

Im folgenden wird die Bearbeitung zweier kurzer Hölzer 2 in der Maschine näher beschrieben. Wie Fig. 4 zeigt, sind die beiden Hölzer 2 in die Vorschubelemente 14', 15' der Vorschubeinheit 8' eingespannt. Die Kolbenstange 25' der Verstelleinrichtung 26' ist vollständig ausgefahren. Von einem Bediener 30 werden die Hölzer 2 in die Vorschubelemente 14', 15' eingelegt und mit deren Klemmbacken 16', 17', 22', 23' eingespannt. Diese Klemmbacken sind in Richtung auf den Bediener 30 offen, so daß er die Hölzer 2 bei geöffneten Klemmbacken bequem einlegen kann. Die Einlegerichtung 31 der Hölzer 2 liegt senkrecht zur Vorschubrichtung 13. Damit die Hölzer 2 auf den Vorschubelementen 14', 15' einfach und genau ausgerichtet werden können, ist für den Einspannvorgang der Hölzer 2 jeweils ein Anschlag 32', 33' vorgesehen. An ihm werden die Hölzer 2 durch den Bediener 30 mit ihren in Vorschubrichtung 13 vorderen Stirnseiten zur Anlage gebracht. Die Hölzer 2 stehen somit in Vorschubrichtung 13 über die Vorschubelemente 14', 15' über.

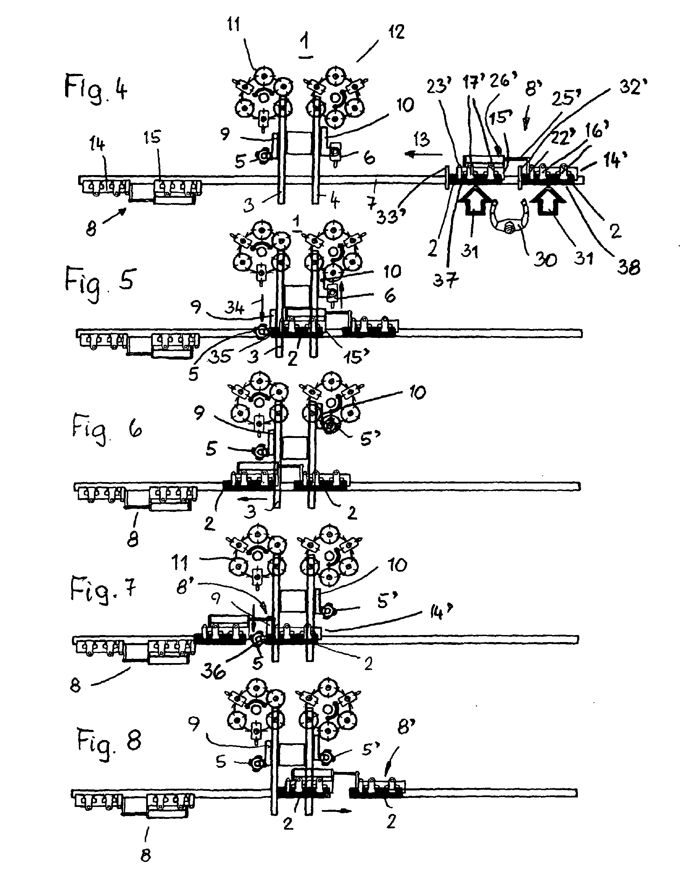

Nach dem Einspannen wird die Vorschubeinheit 8' in Vorschubrichtung 13 längs der Führung 7 zunächst in die Position gemäß Fig. 5 verfahren. Der Schlitten 10 der Bearbeitungseinheit 1 ist zurückgefahren, so daß durch das Werkzeug 6 auf dem Schlitten 10 der Transport der Vorschubeinheit 8' nicht behindert wird. Der Schlitten 9 mit dem Werkzeug 5 wird aus der zurückgezogenen Lage senkrecht zur Vorschubrichtung 13 in Transportrichtung 34 längs der Führung 3 verfahren. Die Vorschubeinheit 8' wird in einer solchen Position angehalten, daß die in Vorschubrichtung vordere Stirnseite 35 des auf dem Vorschubelement 15' eingespannten Holzes 2 durch das Werkzeug 5, im Ausführungsbeispiel ein Fräser, stirnseitig bearbeitet werden kann. Der Schlitten 9 mit dem Werkzeug 5 wird so weit längs der Führung 3 verschoben, daß die gesamte Stirnseite 35 des Holzes 2 auf dem Vorschubelement 15' bearbeitet ist. Nach der Bearbeitung der Stirnseite 35 wird das Werkzeug 5 mit dem Schlitten 9 längs der Führung 3 zurückgefahren (Fig. 6). Dann kann die Vorschubeinheit 8' so weitergetaktet werden, daß nunmehr die in Vorschubrichtung 13 vordere Stirnseite 36 des auf dem Vorschubelement 14' festgespannten Holzes 2 im Arbeitsbereich des Werkzeuges 5 liegt (Fig. 7). Der Schlitten 9 mit dem Werkzeug 5 wird erneut in Transportrichtung 34 verfahren, wobei das Werkzeug 5 die Stirnseite 36 des auf dem Vorschubelement 14' befindlichen Holzes 2 bearbeitet. Der Abstand d₁ bzw. d₂ (Fig. 1) ist so eingestellt, daß das Werkzeug 5 kollisionsfrei zwischen die beiden Hölzer 2 auf der Vorschubeinheit 8' einfahren kann.

Anschließend wird der Schlitten 9 mit dem Werkzeug 5 so weit zurückgefahren (Fig. 8), daß die Vorschubeinheit 8' entgegen Vorschubrichtung 13 zurückgefahren werden kann. Sobald sich die Vorschubeinheit 8' in ausreichendem Abstand zur Bearbeitungseinheit 1 befindet, wird der Schlitten 10 mit dem Werkzeug 5' in eine solche Position verfahren, daß mit ihm die in Vorschubrichtung 13 linken Längsseiten 37, 38 der Hölzer 2 der Vorschubeinheit 8' bearbeitet werden können. Dieses für die Längsprofilierung eingesetzte Werkzeug 5' kann im Bereich des zugehörigen Werkzeugmagazins 12 in den Schlitten 10 eingewechselt werden, solange die Stirnseiten 35, 36 der Hölzer 2 in der beschriebenen Weise bearbeitet werden.

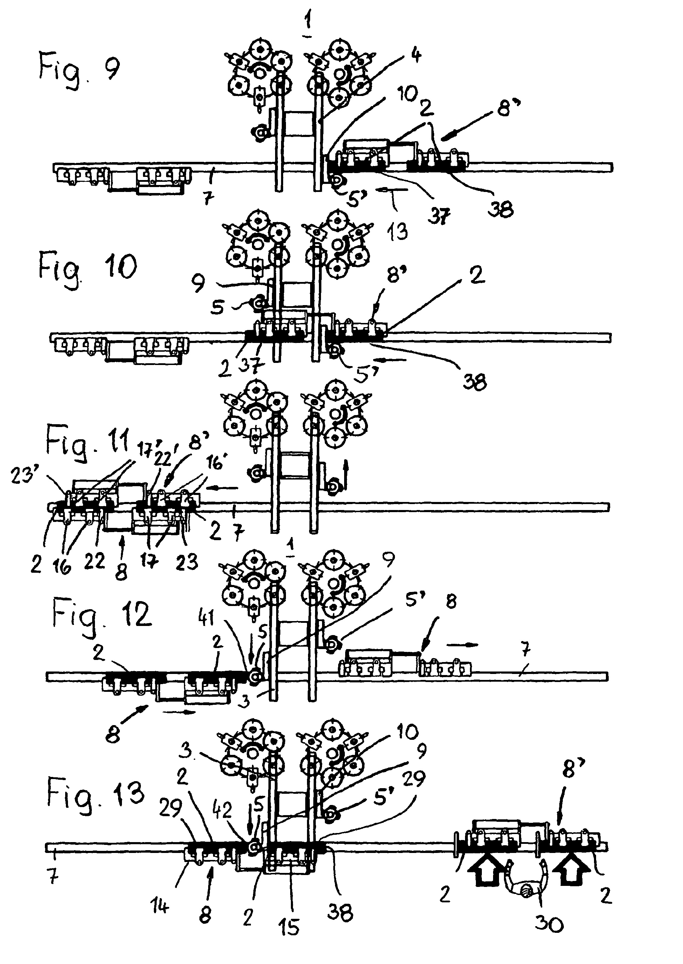

Sobald das Werkzeug 5', vorzugsweise ein Fräser, seine Arbeitslage eingenommen hat (Fig. 9), wird die Vorschubeinheit 8' in Vorschubrichtung 13 längs der Führung 7 verfahren, wobei die Hölzer 2 an ihren in Vorschubrichtung 13 linken Längsseiten 37, 38 durch das Werkzeug 5' bearbeitet werden (Fig. 9 und 10). Das andere Werkzeug 5 auf dem Schlitten 9 ist während der Längsseitenbearbeitung so weit zurückgezogen, daß es den Vorschub der Einheit 8' nicht behindert.

Die Vorschubeinheit 8' wird so weit verfahren, bis sie der Vorschubeinheit 8 gegenüberliegt. Sie ist auf der anderen Seite der Führung 7 angeordnet und kann in der in Fig. 11 dargestellten Übergabestellung die teilweise bearbeiteten Hölzer 2 von der Vorschubeinheit 8' übernehmen. Die Klemmbacken 16, 17, 22, 23 sind geöffnet, wobei die jeweils untere Auflage 18, 19 für die Hölzer 2 abgesenkt worden ist, so daß die Hölzer 2, die beim Vorschub der Vorschubeinheit 8' noch eingespannt sind, unter die Klemmbacken der Vorschubeinheit 8 gelangen können. Wie Fig. 11 zeigt, liegen die Klemmbacken 16, 17, 22, 23 mit geringem Abstand quer zur Führung 7 zu den entsprechenden Klemmbacken 16', 17', 22', 23' der Vorschubeinheit 8'. Sobald die Übergabeposition gemäß Fig. 11 erreicht ist, werden die unteren Auflagen 18, 19 hochgefahren und die oberen Klemmbacken 16, 17, 22, 23 in die Klemmposition nach unten gefahren, so daß sie die Hölzer 2 festspannen. Anschließend werden die oberen Klemmbacken 16', 17', 22', 23' der Vorschubeinheit 8' hochgefahren und die Auflagen 18, 19 abgesenkt, so daß sie die Hölzer 2 freigeben. Nunmehr kann die Vorschubeinheit 8' längs der Führung 7 zurück in die Ausgangsposition gefahren werden, in der der Bediener 30 die nächsten Hölzer 2 in der beschriebenen Weise in die Vorschubeinheit 8 einlegen und einspannen kann (Fig. 13). Während die Vorschubeinheit 8' in die Ausgangsposition zurückfährt, kann die auf der anderen Seite der Bearbeitungseinheit 1 befindliche Vorschubeinheit 8 in Richtung auf die Bearbeitungseinheit 1 längs der Führung 7 so weit verfahren werden, daß die Stirnseite 41 des in Verfahrrichtung vorderen Holzes 2 im Arbeitsbereich des Werkzeuges 5 liegt (Fig. 12). Mit dem Schlitten 9 wird das Werkzeug 5 längs der Führung 3 so verfahren, daß mit dem Werkzeug 5 die Stirnseite 41 bearbeitet wird. Anschließend wird der Schlitten 9 mit dem Werkzeug 5 so weit zurückgefahren, daß die Vorschubeinheit 8 so weitergetaktet werden kann, daß die Stirnseite 42 des nachfolgenden Holzes 2 der Vorschubeinheit 8 im Arbeitsbereich des Werkzeuges 5 liegt. Der Schlitten 9 kann nunmehr längs der Führung 3 verschoben werden, wobei das Werkzeug 5 die Stirnseite 42 des Holzes 2 bearbeitet (Fig. 13). Hierbei taucht das Werkzeug 5 zwischen die beiden Hölzer 2 auf der Vorschubeinheit 8 ein. Die beiden Vorschubelemente 14, 15 haben einen solchen Abstand voneinander, daß das Werkzeug 5 für diese Stirnseitenbearbeitung kollisionsfrei zwischen die beiden Hölzer 2 eintauchen kann.

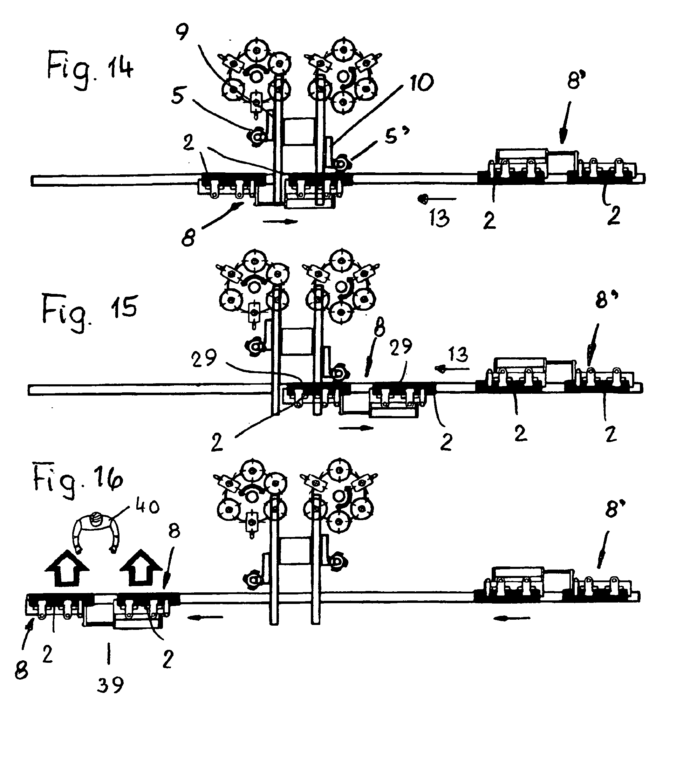

Die Vorschubeinheit 8, deren beide Vorschubelemente 14, 15 in gleicher Weise wie die Vorschubelemente 14', 15' der Vorschubeinheit 8' Abstand voneinander haben, wird dann entgegen Vorschubrichtung 13 weiter längs der Führung 7 verfahren (Fig. 14 und 15). Hierbei werden die Hölzer 2 an ihrer in Vorschubrichtung 13 rechten Längsseite 29 mit dem Werkzeug 5' auf dem Schlitten 10 bearbeitet. Das auf dem Schlitten 9 befindliche Werkzeug 5 ist so weit zurückgefahren, daß es mit den Hölzern 2 nicht in Berührung kommt.

Die Hölzer 2 sind nunmehr an beiden Längsseiten und beiden Stirnseiten bearbeitet worden. Die Vorschubeinheit 8 wird in Vorschubrichtung 13 in eine Abnahmestelle 39 zurückgefahren (Fig. 16), in der ein Bediener 40 die fertig bearbeiteten Hölzer 2 der Vorschubeinheit 8 entnehmen kann. Während der Abnahme der Hölzer 2 wird die Vorschubeinheit 8' mit den neuen Hölzern 2 dem Bearbeitungsbereich der Maschine zugeführt, um die Hölzer in der beschriebenen Weise zu bearbeiten. Für das Einsetzen und das Herausnehmen der Hölzer 2 kann auch derselbe Bediener 30 eingesetzt werden. Es ist aber auch eine automatische Beschickung und/oder Entnahme möglich.

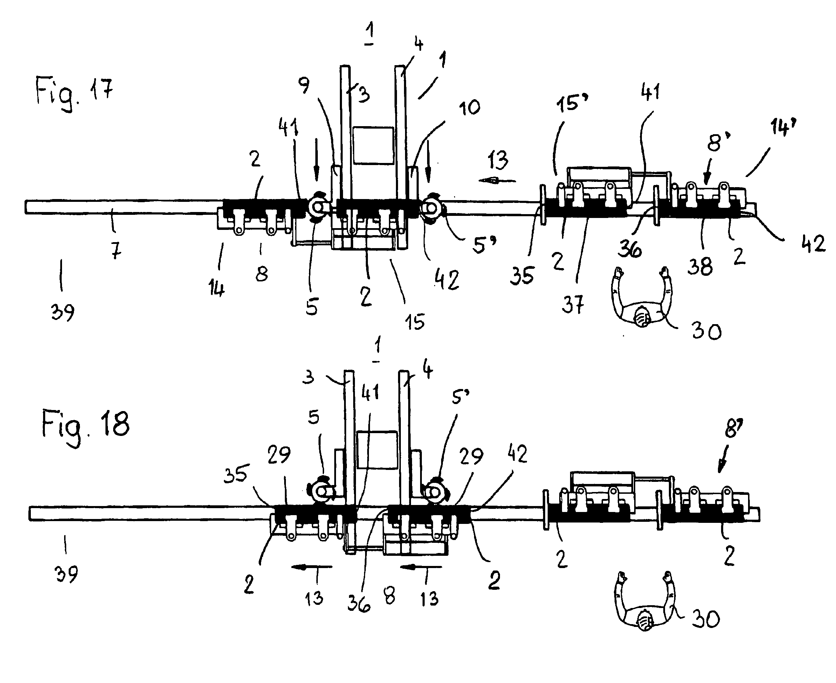

Infolge der erfindungsgemäßen Ausbildung ist auch eine Simultanbearbeitung der beiden Hölzer 2 möglich, wie sie beispielhaft anhand der Fig. 17 und 18 näher beschrieben wird. Zunächst werden die Hölzer 2 in der zuvor beschriebenen Weise auf den Vorschubelementen 14', 15' der Vorschubeinheit 8' festgespannt. Gemäß Fig. 17 ist die Vorschubeinheit 8 so weit in Richtung auf die Bearbeitungseinheit 1 verfahren, daß die in Verfahrrichtung der Vorschubeinheit 8 vorderen Stirnseiten 41, 42 im Arbeitsbereich der beiden Werkzeuge 5, 5' liegen. Mit den Schlitten 9, 10 werden die Werkzeuge 5, 5' an den Stirnseiten 41, 42 vorbeigefahren, die dabei von diesen Werkzeugen bearbeitet werden. Die Hölzer 2 sind auf den Vorschubelementen 14, 15 der Vorschubeinheit 8 so festgespannt, daß sie entgegen Vorschubrichtung 13 über die Vorschubelemente 14 und 15 ragen. Der Abstand zwischen den benachbarten Stirnseiten der Hölzer 2 auf den beiden Vorschubelementen 14, 15 ist so eingestellt, daß das Werkzeug 5 zwischen die beiden Hölzer 2 eintauchen kann. Der Abstand der von den beiden Werkzeugen 5, 5' zu bearbeitenden Stirnseiten 41, 42 der beiden Hölzer 2 entspricht dem Abstand zwischen diesen beiden Werkzeugen 5, 5'.

Nach der Stirnseitenbearbeitung werden die Schlitten 9, 10 mit den Werkzeugen 5, 5' so weit längs der Führungen 3, 4 zurückgefahren, daß mit den Werkzeugen 5, 5' die Längsseiten 29 der Hölzer 2 bearbeitet werden können. Die Vorschubeinheit 8 ist zuvor so weit verfahren worden, daß sie sich auf der gleichen Seite der Bearbeitungseinheit 1 befindet wie die Vorschubeinheit 8'. Anschließend wird die Vorschubeinheit 8 in Vorschubrichtung 13 längs der Führung 7 verfahren, wobei durch die Werkzeuge 5, 5' die in Vorschubrichtung 13 rechte Längsseite 29 der Hölzer 2 bearbeitet wird.

Die auf der Vorschubeinheit 8 eingespannten Hölzer 2 sind zuvor an ihrer anderen Stirnseite und an ihrer anderen Längsseite bearbeitet worden. Hierzu waren die Hölzer 2 zunächst auf der Vorschubeinheit 8' festgespannt, die so weit in Vorschubrichtung 13 verfahren worden ist, daß mit den Werkzeugen 5, 5' die Stirnseiten 41, 42 der Hölzer 2 gleichzeitig bearbeitet werden konnten. Nach dieser Stirnseitenbearbeitung werden die Werkzeuge 5, 5' mit den Schlitten 9, 10 zurückgefahren und die Vorschubeinheit 8' entgegen Vorschubrichtung 13 vor die Bearbeitungseinheit 1 gefahren. Die Werkzeuge 5, 5' werden in eine solche Lage gefahren, daß mit ihnen die in Vorschubrichtung 13 linken Längsseiten 37, 38 der Hölzer 2 bearbeitet werden können. Nach dieser Längsseitenbearbeitung gelangt die Vorschubeinheit 8' in die Übergabeposition, um die teilweise bearbeiteten Hölzer 2 in der beschriebenen Weise der Vorschubeinheit 8 übergeben zu können. Nach der Übergabe fährt die Vorschubeinheit 8' in ihre Ausgangslage zurück, während die Vorschubeinheit 8 in der anhand der Fig. 17 und 18 beschriebenen Weise zur Bearbeitungseinheit 1 gefahren wird, um die anderen Stirnseiten 41, 42 und die anderen Längsseiten 29 zu bearbeiten. Während dieser Bearbeitung kann der Bediener 30 auf der in der Ausgangsposition befindlichen Vorschubeinheit 8' die nächsten Hölzer 2 einspannen, so daß sofort nach der Bearbeitung der Hölzer 2 auf der Vorschubeinheit 8 die neuen Hölzer zur Bearbeitungseinheit 1 transportiert werden können.

Wenn die Vorschubeinheit 8 die Abnahmestation 39 erreicht hat, sind die Hölzer 2 an den beiden Längsseiten 29, 37, 38 und an beiden Stirnseiten 35, 36, 41, 42 bearbeitet.

Mit der beschriebenen Simultanbearbeitung der Hölzer 2 mittels der zweispindeligen Bearbeitungseinheit 1 hat die Bearbeitungsmaschine eine hohe Leistung und Produktivität. Hat die Vorschubeinheit 8, 8' drei Vorschubelemente (gestrichelte Linien in Fig. 1), können in der beschriebenen Weise drei Hölzer mit einer entsprechenden Ausbildung der Bearbeitungsmaschine mit drei Werkzeugen gleichzeitig bearbeitet werden.

Hat die Vorschubeinheit 8, 8' vier Vorschubelemente, dann können die darin eingespannten Hölzer mit den zwei Werkzeugen 5, 5' paarweise nacheinander bearbeitet werden.

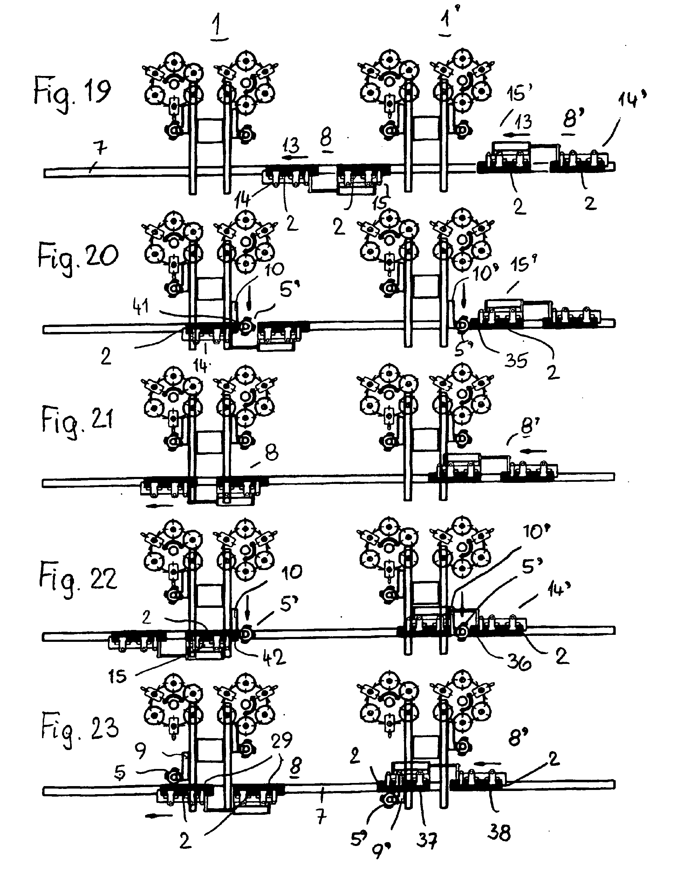

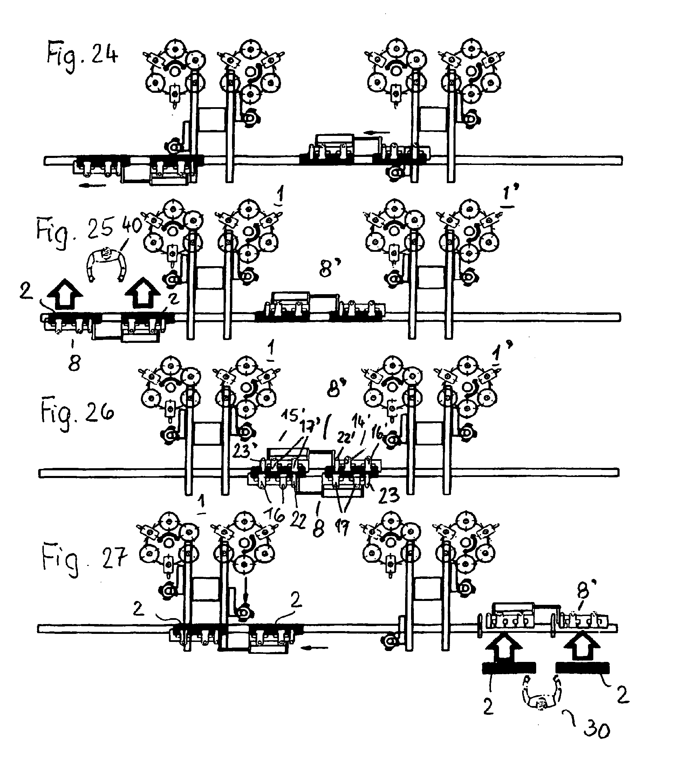

Anhand der Fig. 19 bis 27 wird ein Verfahren beschrieben, bei dem eine Maschine mit zwei Bearbeitungseinheiten 1, 1' mit jeweils zwei Spindeln eingesetzt wird. Die beiden Bearbeitungseinheiten 1, 1' sind gleich ausgebildet und so angeordnet, daß sie jeweils einer Vorschubeinheit 8, 8' zugeordnet sind. Die Übergabe der Hölzer 2 von der Vorschubeinheit 8' auf die Vorschubeinheit 8 erfolgt in diesem Falle im Bereich zwischen den beiden Bearbeitungseinheiten 1, 1' (Fig. 26).

Ausgehend von Fig. 19 befinden sich die beiden Vorschubeinheiten 8, 8' mit den eingespannten Hölzern 2 jeweils vor der zugehörigen Bearbeitungseinheit 1, 1'. Die Hölzer 2 sind auf den beiden Vorschubeinheiten 8, 8' so eingespannt, daß die Hölzer 2 der Vorschubeinheit 8 über das in Vorschubrichtung 13 rückwärtige Ende der Vorschubelemente 14, 15 und die Hölzer 2 der Vorschubeinheit 8' über das in Vorschubrichtung 13 vordere Ende der Vorschubelemente 14', 15' ragen. Die auf der Vorschubeinheit 8 eingespannten Hölzer 2 sind bereits an einer Stirnseite und einer Längsseite bearbeitet worden, als sie auf der Vorschubeinheit 8' festgespannt worden waren. Die auf der Vorschubeinheit 8' eingespannten Hölzer 2 sind noch nicht bearbeitet worden.

Die Vorschubeinheit 8 befindet sich im Bereich zwischen den beiden Bearbeitungseinheiten 1, 1'. In diesem Bereich ist die Übergabe der Hölzer 2 von der Vorschubeinheit 8' auf die Vorschubeinheit 8 vorgenommen worden.

Ausgehend von der in Fig. 19 dargestellten Lage, bei der sich beide Vorschubeinheiten 8, 8' im Bereich vor den Bearbeitungseinheiten 1 bzw. 1' befinden, werden beide Vorschubeinheiten in Vorschubrichtung 13 längs der Führung 7 verfahren. Die Vorschubeinheit 8 wird dann angehalten, wenn sich die rückwärtige Stirnseite 41 des Holzes 2 auf dem Vorschubelement 14 im Arbeitsbereich des Werkzeuges 5' der Bearbeitungseinheit 1 befindet. Die Vorschubeinheit 8' wird angehalten, wenn sich die in Vorschubrichtung 13 vordere Stirnseite 35 des Holzes 2 auf dem Vorschubelement 15 im Arbeitsbereich des Werkzeuges 5' der Bearbeitungseinheit 1' befindet. Die beiden Werkzeuge 5' werden mit dem Schlitten 10, 10' an den Stirnseiten 41, 35 vorbeigeführt, wobei die Hölzer an diesen Stirnseiten bearbeitet werden (Fig. 20).

Anschließend werden die Werkzeuge der beiden Bearbeitungseinheiten 1, 1' zurückgefahren und die Vorschubeinheiten 8, 8' weitergetaktet (Fig. 21), bis die in Vorschubrichtung 13 rückwärtige Stirnseite 42 des Holzes 2 auf dem Vorschubelement 15 und die in Vorschubrichtung 13 vordere Stirnseite 36 des Holzes 2 auf dem Vorschubelement 14' sich im Bearbeitungsbereich der Werkzeuge 5' befinden (Fig. 22).

Mit den Schlitten 10, 10' werden die Werkzeuge 5' an den Stirnseiten 42, 36 der Hölzer 2 vorbeigeführt und bearbeitet.

Wie die Fig. 20 und 22 zeigen, sind die beiden Vorschubelemente 14, 15 und 14', 15' der Vorschubeinheiten 8, 8' in einem solchen Abstand zueinander eingestellt, daß das jeweilige Werkzeug 5 für die Stirnseitenbearbeitung zwischen die Hölzer 2 der Vorschubeinheiten 8, 8' einfahren kann.

Nach der Stirnseitenbearbeitung werden die Schlitten 10, 10' zurückgefahren, damit die Werkzeuge 5' aus dem Bewegungsbereich der Vorschubeinheiten 8, 8' gelangen. Gleichzeitig mit dem Zurückfahren der Schlitten 10, 10' können die Schlitten 9, 9' der beiden Bearbeitungseinheiten 1, 1' in Richtung auf die Vorschubeinheiten 8, 8' in eine Position zur Längsbearbeitung der Hölzer 2 gefahren werden (Fig. 23). Die Schlitten 9, 9' waren während der Stirnseitenbearbeitung der Hölzer 2 zurückgefahren, so daß sie die Stirnseitenbearbeitung nicht behindern konnten. Der Schlitten 9 wird so weit verfahren, daß das Werkzeug 5 die in Vorschubrichtung 13 rechte Längsseite 29 der Hölzer 2 der Vorschubeinheit 8 und das Werkzeug 5' der Bearbeitungseinheit 1' die in Vorschubrichtung linken Längsseiten 37, 38 der Hölzer 2 der Vorschubeinheit 8' bearbeiten kann. Die beiden Vorschubeinheiten 8, 8' werden weiter in Vorschubrichtung 13 längs der Führung 7 gefahren, wobei die beiden Werkzeuge 5, 5' der beiden Bearbeitungseinheiten 1, 1' die rechte und die linke Längsseite 29, 37, 38 der Hölzer 2 der Vorschubeinheiten 8, 8' bearbeiten (Fig. 23 und 24).

Sobald die Vorschubeinheit 8' ihre Übergabeposition zwischen den beiden Bearbeitungseinheiten 1, 1' erreicht hat (Fig. 25), kann die Vorschubeinheit 8, der die fertig bearbeiteten Hölzer 2 vom Bediener 40 entnommen worden sind, zurück in die Übergabeposition zwischen den beiden Bearbeitungseinheiten 1, 1' fahren (Fig. 26). Die Klemmbacken 16, 17, 22, 23 der Vorschubeinheit 8 sind hochgefahren und die Auflagen 18, 19 abgesenkt, so daß die in der Vorschubeinheit 8' eingespannten und an ihren Längsseiten 37, 38 und ihren Stirnseiten 35, 36 bearbeiteten Hölzer 2 zuverlässig von der Vorschubeinheit 8 übernommen werden. Sobald die durch die Werkzeuge der Bearbeitungseinheit 1' teilweise bearbeiteten Hölzer 2 auf der Vorschubeinheit 8 festgespannt sind, werden die Klemmbacken 16', 17', 22', 23' in ihre Lösestellung hochgefahren und die Auflagen 18, 19 abgesenkt, so daß die Hölzer 2, die bereits in der Vorschubeinheit 8 eingespannt sind, freigegeben werden. Die Vorschubeinheit 8' kann dann in die Ausgangsstellung fahren (Fig. 27), in der der Bediener 30 die nächsten Hölzer 2 in der beschriebenen Weise einspannt. Die Vorschubeinheit 8 fährt inzwischen zur Bearbeitungseinheit 1, in der die teilweise bearbeiteten Hölzer 2 in der anhand der Fig. 19 bis 25 beschriebenen Weise bearbeitet werden. Nunmehr beginnt ein neuer Arbeitszyklus, bei dem gleichzeitig vier Hölzer in der beschriebenen Weise an ihren Längs- und Stirnseiten bearbeitet werden. An beiden Bearbeitungseinheiten 1, 1' ist jeweils auch eine Simultanbearbeitung möglich, wie sie oben beschrieben worden ist.

Je nach den Anforderungen können an den Hölzern 2 einzelne Längs- oder Querbearbeitungen entfallen und/oder weitere Bearbeitungen, wie Bohren, Nutenfräsen usw., an den Hölzern 2 vorgenommen werden. Die entsprechenden Werkzeuge sind in den Werkzeugmagazinen 11, 12 gelagert und können bei Bedarf einfach in die Bearbeitungsspindeln der Schlitten 9, 10 eingewechselt werden. In Fig. 4 ist beispielhaft das Werkzeug 6 ein Bohrer, mit dem, falls notwendig, in den Längsseiten der Hölzer 2 Bohrungen eingebracht werden können.

## Patentansprüche

1. Vorschubeinheit für eine Maschine zum Bearbeiten von Werkstücken (2) aus Holz, Kunststoff oder dergleichen, mit wenigstens einer Klemmeinrichtung (16, 17, 22; 16', 17', 23) zum Festspannen der Werkstücke (2),
**dadurch gekennzeichnet, dass** die Vorschubeinheit (8, 8') wenigstens zwei, jeweils eine Klemmeinrichtung (16, 17, 22; 16', 17', 23) für die Werkstücke (2) aufweisende Vorschubelemente (14, 15; 14', 15') aufweist, deren Abstand relativ zueinander in Vorschubrichtung (13) einstellbar ist und die jeweils für sich zum Einspannen eines kürzeren Werkstückes (2) und gemeinsam zum Einspannen eines längeren Werkstückes (2) vorgesehen sind.

2. Vorschubeinheit nach Anspruch 1,
**dadurch gekennzeichnet, daß** die beiden Vorschubelemente (14, 15; 14', 15') durch eine Verstelleinrichtung (26, 26') miteinander verbunden sind.

3. Vorschubeinheit nach Anspruch 2,
**dadurch gekennzeichnet, daß** die Verstelleinrichtung (26, 26') wenigstens eine Kolben-Zylinder-Einheit aufweist.

4. Vorschubeinheit nach Anspruch 3,
**dadurch gekennzeichnet, daß** die Kolben-Zylinder-Einheit eine Kolbenstange (25) aufweist, die mit dem einen Vorschubelement (14, 14') gekoppelt ist.

5. Vorschubeinheit nach Anspruch 3 oder 4,
**dadurch gekennzeichnet, daß** der Zylinder (27) der Kolben-Zylinder-Einheit am anderen Vorschubelement (15, 15') vorgesehen ist.

6. Vorschubeinheit nach einem der Ansprüche 1 bis 5,
**dadurch gekennzeichnet, daß** die Vorschubelemente (14, 15; 14', 15') als Einheit verfahrbar sind.

7. Verfahren zum Bearbeiten von Werkstücken aus Holz, Kunststoff und dergleichen, bei dem die Werkstücke an zumindest einer Stirnseite und/oder Längsseite durch wenigstens ein Werkzeug bearbeitet werden, unter Verwendung der Vorschubeinheit nach einem der Ansprüche 1 bis 6,
**dadurch gekennzeichnet, daß** in der Vorschubeinheit (8, 8') wenigstens zwei Werkstücke (2) so eingespannt werden, daß sie mit einem Ende über das jeweilige Vorschubelement (14, 15; 14', 15') ragen.

8. Verfahren nach Anspruch 7,
**dadurch gekennzeichnet, daß** die beiden Vorschubelemente (14, 15; 14', 15') der Vorschubeinheit (8, 8') so relativ zueinander in Vorschubrichtung (13) eingestellt werden, daß zwischen die beiden Werkstücke (2) auf den Vorschubelementen (14, 15; 14', 15') das Werkzeug (5, 5') zur Bearbeitung der Stirnseiten (35, 36; 41, 42) der Werkstücke (2) einfahren kann.

9. Verfahren, insbesondere nach Anspruch 7 oder 8,
**dadurch gekennzeichnet, daß** die Werkstücke (2) auf der Vorschubeinheit (8) zunächst an einer Stirnseite (35, 36) und/oder an einer Längsseite (37, 38) bearbeitet und anschließend an eine weitere Vorschubeinheit (8') übergeben werden, auf der die andere Stirnseite (41, 42) und/oder die andere Längsseite (29) der Werkstücke (2) bearbeitet werden.

10. Verfahren, insbesondere nach einem der Ansprüche 7 bis 9,
**dadurch gekennzeichnet, daß** gleichzeitig mehrere Werkstücke (2) bearbeitet werden, die auf wenigstens zwei Vorschubelementen (14, 15) eingespannt sind.

11. Verfahren nach Anspruch 10,
**dadurch gekennzeichnet, daß** die Werkstücke (2) auf den Vorschubeinheiten (8, 8') teilweise bearbeitet werden, und daß die teilweise bearbeiteten Werkstücke (2) anschließend von der einen Vorschubeinheit (8) der anderen Vorschubeinheit (8') übergeben werden.

12. Verfahren nach Anspruch 10 oder 11,
**dadurch gekennzeichnet, daß** die beiden Vorschubeinheiten (8, 8') gleich ausgebildet sind.

13. Verfahren nach einem der Ansprüche 10 bis 12,
**dadurch gekennzeichnet, daß** die Übergabe der Werkstücke zwischen den Vorschubeinheiten (8, 8') im Bereich zwischen zwei Bearbeitungseinheiten (1, 1') vorgenommen wird.

14. Verfahren nach einem der Ansprüche 10 bis 13,
**dadurch gekennzeichnet, daß** auf den Vorschubeinheiten (8, 8') jeweils zwei Werkstücke (2) eingespannt werden.

15. Verfahren nach einem der Ansprüche 10 bis 14,
**dadurch gekennzeichnet, daß** die Stirnseiten (35, 41; 36, 42) der Werkstücke (2) jeweils paarweise gleichzeitig bearbeitet werden.

16. Verfahren nach einem der Ansprüche 10 bis 15,
**dadurch gekennzeichnet, daß** die einen Längsseiten (29, 37, 38) der Werkstücke (2) jeweils paarweise gleichzeitig bearbeitet werden.

17. Verfahren nach einem der Ansprüche 10 bis 16,
**dadurch gekennzeichnet, daß** nach der Übergabe der Werkstükke (2) von der einen an die andere Vorschubeinheit (8, 8') die anderen Längsseiten und Stirnseiten der Werkstücke (2) jeweils paarweise gleichzeitig bearbeitet werden.

18. Verfahren, insbesondere nach einem der Ansprüche 7 bis 17,
**dadurch gekennzeichnet, daß** die Werkstücke (2) bei der Übergabe zwischen den Vorschubeinheiten (8, 8') stets eingespannt bleiben.

19. Verfahren nach einem der Ansprüche 7 bis 18,
**dadurch gekennzeichnet, daß** die Werkstücke (2) bei der Bearbeitung der Längsseite an wenigstens einem Bohraggregat gebohrt werden.

20. Verfahren nach einem der Ansprüche 7 bis 19,
**dadurch gekennzeichnet, daß** als Vorschubeinheit (8, 8') eine Spanneinheit verwendet wird.

21. Verfahren nach einem der Ansprüche 7 bis 20,
**dadurch gekennzeichnet, daß** die Werkstücke (2) zwischen oberen und unteren Klemmbacken (16, 17, 18, 19) eingespannt werden.

22. Verfahren nach Anspruch 21,
**dadurch gekennzeichnet, daß** zumindest ein Teil der oberen Klemmbacken (16, 17) der Vorschubeinheit (8, 8') mit einem Antrieb verstellt wird.

23. Verfahren nach Anspruch 21 oder 22,
**dadurch gekennzeichnet, daß** die oberen Klemmbacken (16, 17) einzeln verstellbar sind.

24. Verfahren, insbesondere nach einem der Ansproüche 21 bis 23,
**dadurch gekennzeichnet, daß** die oberen Klemmbacken (16, 17) Lücken (20, 21) zwischen den unteren Klemmbacken (18, 19) gegenüberliegen.

## Claims

1. A feed unit for a machine for the machining of workpieces (2) consisting of wood, plastics material or the like, with at least one clamping device (16,17, 22; 16', 17', 23) for clamping the workpieces (2) in a fixed manner, **characterized in that** the feed unit (8, 8') has at least two feed elements (14,15; 14', 15') which have one clamping device (16, 17, 22; 16', 17', 23) in each case for the workpieces (2) and the distance of which relative to each other in the feed direction (13) is capable of being set and which in each case are provided individually in order to clamp a shorter workpiece (2) and together in order to clamp a longer workpiece (2).

2. A feed unit according to Claim 1, **characterized in that** the two feed elements (14, 15; 14', 15') are connected to each other by a displacement device (26, 26').

3. A feed unit according to Claim 2, **characterized in that** the displacement device (26, 26') has at least one piston-eylinder unit.

4. A feed unit according to Claim 3, **characterized in that** the piston-cylinder unit has a piston rod (25) which is coupled to one feed element (14, 14').

5. A feed unit according to Claim 3 or 4, **characterized in that** the cylinder (27) of the piston-cylinder unit is provided on the other feed element (15,15')*.*

6. A feed unit according to any one of Claims 1 to 5, **characterized in that** the feed elements (14, 15; 14', 15') are capable of being moved as a unit.

7. A method of machining workpieces consisting of wood, plastics material and the like, in which the workpieces are machined on at least one end face and/or longitudinal side by at least one tool, whilst using the feed unit according to any one of Claims 1 to 6, **characterized in that** at least two workpieces (2) are clamped in the feed unit (8, 8') in such a way that they project with one end beyond the respective feed element (14, 15; 14', 15').

8. A method according to Claim 7, **characterized in that** the two feed elements (14,15; 14', 15') of the feed unit (8, 8') are set relative to each other in the feed direction (13) in such a way that the tool (5, 5') can move in between the two workpieces (2) on the feed elements (14, 15; 14', 15') in order to machine the end faces (35, 36; 41, 42) of the workpieces (2).

9. A method, in particular according to Claim 7 or 8, **characterized in that** the workpieces (2) are first machined on one end face (35, 36) and/or on one longitudinal side (37, 38) on the feed unit (8) and, after that, they are transferred to a further feed unit (8') on which the other end face (41, 42) and/or the other longitudinal side (29) of the workpieces (2) is or are machined.

10. A method, in particular according to any one of Claims 7 to 9, **characterized in that** a plurality of workpieces (2), which are clamped on at least two feed elements (14, 15), are machined simultaneously.

11. A method according to Claim 10, **characterized in that** the workpieces (2) are machined in part on the feed units (8, 8'), and the workpieces (2) machined in part are then transferred from one feed unit (8) to the other feed unit (8').

12. A method according to Claim 10 or 11, **characterized in that** the two feed units (8, 8') are designed in the same way.

13. A method according to any one of Claims 10 to 12, **characterized in that** the transfer of the workpieces between the feed units (8, 8') is carried out in the region between two machining units (1, 1').

14. A method according to any one of Claims 10 to 13, **characterized in that** two workpieces (2) are clamped in each case on the feed units (8, 8').

15. A method according to any one of Claims 10 to 14, **characterized in that** the end faces (35, 41; 36, 42) of the workpieces (2) are machined simultaneously in pairs in each case.

16. A method according to any one of Claims 10 to 15, **characterized in that** one of the longitudinal sides (29, 37, 38) of the workpieces (2) is machined simultaneously in pairs in each case.

17. A method according to any one of Claims 10 to 16, **characterized in that** the other longitudinal sides and end faces of the workpieces (2) are machined simultaneously in pairs in each case after the transfer of the workpieces (2) from one feed unit to the other (8,8').

18. A method, in particular according to any one of Claims 7 to 17, **characterized in that** the workpieces (2) are always clamped during the transfer between the feed units (8, 8').

19. A method according to any one of Claims 7 to 18, **characterized in that** the workpieces (2) are drilled on at least one drilling unit during the machining of the longitudinal side.

20. A method according to any one of Claims 7 to 19, **characterized in that** a clamping unit is used as the feed unit (8, 8').

21. A method according to any one of Claims 7 to 20, **characterized in that** the workpieces (2) are clamped between upper and lower clamping jaws (16, 17, 18, 19).

22. A method according to Claim 21, **characterized in that** at least part of the upper clamping jaws (16, 17) of the feed unit (8, 8') is displaced by a drive.

23. A method according to Claim 21 or 22, **characterized in that** the upper clamping jaws (16, 17) are displaceable individually.

24. A method, in particular according to any one of Claims 21 to 23, **characterized in that** the upper clamping jaws (16, 17) are opposite gaps (20, 21) between the lower clamping jaws (18, 19).

## Revendications

1. Unité d'avance pour une machine à usiner des pièces (2) en bois, matières plastiques ou similaires, avec au moins un dispositif de serrage (16, 17, 22 ; 16', 17', 23) pour le serrage des pièces (2),
**caractérisée en ce que** l'unité d'avance (8, 8') comprend au moins deux éléments d'avance (14, 15 ; 14', 15') comportant chacun un dispositif de serrage (16, 17, 22 ; 16', 17', 23) pour les pièces (2) et dont l'espacement est réglable entre eux dans le sens de l'avance (13), et qui sont prévus chacun individuellement pour le serrage d'une pièce (2) courte, et tous ensemble pour le serrage d'une pièce (2) longue.

2. Unité d'avance selon la revendication 1,
**caractérisée en ce que** les deux éléments d'avance (14, 15 ; 14', 15') sont reliés entre eux par un dispositif de réglage (26, 26').

3. Unité d'avance selon la revendication 2,
**caractérisée en ce que** le dispositif de réglage (26, 26') comprend au moins une unité piston-cylindre.

4. Unité d'avance selon la revendication 3,
**caractérisée en ce que** l'unité piston-cylindre comprend une tige de piston (25) à laquelle le premier élément d'avance (14, 14') est accouplé.

5. Unité d'avance selon la revendication 3 ou la revendication 4,
**caractérisée en ce que** le cylindre (27) de l'unité piston-cylindre est prévu sur l'autre élément d'avance (15, 15').

6. Unité d'avance selon l'une des revendications 1 à 5,
**caractérisée en ce que** les éléments d'avance (14, 15 ; 14', 15') sont déplaçables en tant qu'unité.

7. Procédé pour l'usinage de pièces en bois, matières plastiques ou similaires, où les pièces sont usinées sur au moins une face frontale et/ou une face longitudinale par au moins un outil, recourant à l'unité d'avance selon l'une des revendications 1 à 6,
**caractérisé en ce qu'**au moins deux pièces (2) sont serrées dans l'unité d'avance (8, 8') de manière à dépasser par une extrémité de l'élément d'avance (14, 15 ; 14', 15') correspondant.

8. Procédé selon la revendication 7,
**caractérisé en ce que** les deux éléments d'avance (14, 15 ; 14', 15') de l'unité d'avance (8, 8') sont réglés l'un relativement à l'autre dans le sens de l'avance (13) de manière que l'outil (5, 5') puisse être introduit entre les deux pièces (2) sur les éléments d'avance (14, 15 ; 14', 15') pour l'usinage des faces frontales (35, 36 ; 41, 42) des pièces (2).

9. Procédé, en particulier selon la revendication 7 ou la revendication 8,
**caractérisé en ce que** les pièces (2) sur l'unité d'avance (8) sont usinées sur une face frontale (35, 36) et/ou sur une face longitudinale (37, 38) avant d'être transférées à une autre unité d'avance (8'), sur laquelle l'autre face frontale (41, 42) et/ou l'autre face longitudinale (29) des pièces (2) sont usinées.

10. Procédé, en particulier selon l'une des revendications 7 à 9,
**caractérisé en ce que** plusieurs pièces (2) sont usinées simultanément, lesquelles sont serrées sur au moins deux éléments d'avance (14, 15).

11. Procédé selon la revendication 10,
**caractérisé en ce que** les pièces (2) sont partiellement usinées sur les unités d'avance (8, 8'), et **en ce que** les pièces (2) partiellement usinées sont ensuite transférées de la première unité d'avance (8) à l'autre unité d'avance (8').

12. Procédé selon la revendication 10 ou la revendication 11,
**caractérisé en ce que** les deux unités d'avance (8, 8') sont réalisées à l'identique.

13. Procédé selon l'une des revendications 10 à 12,
**caractérisé en ce que** le transfert des pièces entre les unités d'avance (8, 8') est effectué entre deux unités d'usinage (1, 1').

14. Procédé selon l'une des revendications 10 à 13,
**caractérisé en ce que** deux pièces (2) sont serrées sur chaque unité d'avance (8, 8').

15. Procédé selon l'une des revendications 10 à 14,
**caractérisé en ce que** les faces frontales (35, 41 ; 36, 42) des pièces (2) sont usinées simultanément par paire.

16. Procédé selon l'une des revendications 10 à 15,
**caractérisé en ce que** les premières faces longitudinales (29, 37, 38) des pièces (2) sont usinées simultanément par paire.

17. Procédé selon l'une des revendications 10 à 16,
**caractérisé en ce qu'**après le transfert des pièces (2) d'une unité d'avance à l'autre (8, 8'), les autres faces longitudinales et faces frontales des pièces (2) sont usinées simultanément par paire.

18. Procédé, en particulier selon l'une des revendications 7 à 17,
**caractérisé en ce que** les pièces (2) restent toujours serrées lors du transfert entre les unités d'avance (8, 8').

19. Procédé selon l'une des revendications 7 à 18,
**caractérisé en ce que** les pièces (2) sont alésées sur au moins un groupe d'alésage lors de l'usinage de la face longitudinale.

20. Procédé selon l'une des revendications 7 à 19,
**caractérisé en ce qu'**une unité de serrage est utilisée comme unité d'avance (8, 8').

21. Procédé selon l'une des revendications 7 à 20,
**caractérisé en ce que** les pièces (2) sont serrées entre des mâchoires de serrage inférieures et supérieures (16, 17, 18, 19).

22. Procédé selon la revendication 21,
**caractérisé en ce qu'**au moins une partie des mâchoires de serrage supérieures (16, 17) de l'unité d'avance (8, 8') est réglée au moyen d'un entraînement.

23. Procédé selon la revendication 21 ou la revendication 22,
**caractérisé en ce que** les mâchoires de serrage supérieures (16, 17) sont réglables individuellement.

24. Procédé, en particulier selon l'une des revendications 21 à 23,
**caractérisé en ce que** des créneaux (20, 21) entre les mâchoires de serrage inférieures (18, 19) sont opposés aux mâchoires de serrage supérieures (16, 17).
